# EUROPEAN PATENT SPECIFICATION

(11) **EP 2 789 243 B1**
(45) Date of publication and mention of the grant of the patent: **22.11.2017**
(21) Application number: 13769446.9
(22) Date of filing: 30.03.2013
(51) Int. Cl.: A23C 20/00

(54) **CHEESE-LIKE FOOD ARTICLE**
KÄSEÄHNLICHES NAHRUNGSMITTEL
ALIMENT DE TYPE FROMAGE

(30) Priority: 30.03.2012 JP 2012079692
(43) Date of publication of application: 15.10.2014
(73) Proprietor: Fuji Oil Company Limited, Osaka 598-8540 (JP)
(72) Inventor: TSUJII, Setsuo, Izumisano-shi Osaka 598-8540 (JP); SHIROTANI, Naoki, Izumisano-shi Osaka 598-8540 (JP)
(74) Representative: Horn Kleimann Waitzhofer Patentanwälte PartG mbB
(86) International application number: PCT/JP2013/059782
(87) International publication number: WO 2013/147280

(56) References cited:
- EP-A2- 2 030 507
- NZ-A- 280 444
- US-A- 5 807 601
- DATABASE GNPD [Online] MINTEL; November 2011 (2011-11), Anonymous: "Fancy Shredded Imitation Cheddar Cheese", XP002739919, Database accession no. 1659979
- DATABASE GNPD [Online] MINTEL; December 2010 (2010-12), Anonymous: "Shredded Imitation Mozzarella Cheese", XP002739920, Database accession no. 1450416
- DATABASE GNPD [Online] MINTEL; Anonymous: "Chihuahua Style Cheese", XP002739921, Database accession no. 1119012
- DARSHAN TRIVEDI ET AL: "Effect of different starches on rheological and microstructural properties of (I) model processed cheese", INTERNATIONAL JOURNAL OF FOOD SCIENCE AND TECHNOLOGY, vol. 43, no. 12, 1 December 2008 (2008-12-01), pages 2191-2196, XP055190172, ISSN: 0950-5423, DOI: 10.1111/j.1365-2621.2008.01851.x
- DR. B. SENGE ET AL.: "Einfluss von Stärkekonzentration und -art auf die Strukturausbildung in Analogkäse", DMW-DIE MILCHWIRTSCHAFT, vol. 23, 1 January 2011 (2011-01-01), pages 784-792, XP002739922,
- NORONHA N ET AL: "Inclusion of starch in imitation cheese: Its influence on water mobility and cheese functionality", FOOD HYDROCOLLOIDS, ELSEVIER BV, NL, vol. 22, no. 8, 1 December 2008 (2008-12-01), pages 1612-1621, XP022712120, ISSN: 0268-005X, DOI: 10.1016/J.FOODHYD.2007.11.007 [retrieved on 2007-11-21]
- N.NORONHA ET AL.: 'Inclusion of starch in imitation cheese:Its influence on water mobility and cheese functionality.' FOOD HYDROCOLLOIDS vol. 22, no. 8, 2008, pages 1612 - 1621, XP022712120
- AIQIAN YE ET AL.: 'Phase structures impact the rheological properties of rennet-casein-based imitaion cheese containing starch.' FOOD HYDROCOLLOIDS vol. 23, no. 3, 2009, pages 867 - 873, XP025573958
- MOHD.SURIA AFFANDI YUSOFF ET AL.: 'Palm-based imitation cheese' PALM OIL DEVELOPMENTS vol. 23, 1996, pages 4 - 6, XP008171483

## Description

### [Technical Field]

The present invention relates generally to a cheese-like food product.

### [Background Art]

Cheese is a kind of food derived from raw milk from cows, water buffalos, sheep, goats, yaks, etc. It is produced by processing such as coagulation or fermentation. Cheese may be eaten alone, or may be consumed with other foods, such as, pizza, pasta, gratin, risotto, cheese fondue, etc. The demand for cheese has been increasing every year.

Because it is cooked with heat mainly when formulated with other foods, cheese desirably melts and is easily spun; characteristics necessary for easy shifting to a paste phase upon heating. In addition, preferred types of cheese exhibit a physical property that accounts for the maintenance of a soft edible texture even when it gets cool.

Among natural cheeses for use in pizzas are mozzarella cheese and Gouda cheese. At a high temperature, these natural cheeses are of high enough spinnability to enter into a sol phase. However, they turn into a hard wax phase, with a consequent significant decrease in both flavor and edible texture, when they are cooled down to room temperature (15 - 25°C).

There is also processed cheese that is made from a natural cheese combined with molten salt, emulsifiers, water, and the like by heating and emulsifying. For example, processed cheeses are disclosed in Patent documents 1 and 2, with an emphasis placed upon their good spinnability at high temperatures. All of them become hardened at room temperature (15 - 25°C). Since they have a gel of calcium paracaseinate, characteristic of rennet-coagulated cheese, as a backbone, processed cheeses with spinnability at high temperature regions, although in a sol phase under heat, are solidified at room temperature (15 - 25°C), and thus fail to exhibit spinnability at room temperature.

This is considered attributable to the fact that the cheese protein calcium paracaseinate turns from an insoluble form to a soluble form of sodium paracaseinate during the cheese processing with an emulsifier, and remains as casein glue.

Accordingly, cheese having a gel of protein as a backbone, like natural cheese or processed cheese, suffers from the drawback of being unable to retain a soft edible texture after being heated.

For use in pizzas or gratin recipes, processed cheese, which is prepared by cutting or slicing of a block-shaped cheese, is generally used because it is readily used or melted upon heating, and thus there is a need for the development of a cheese having processing adaptability to be sufficiently shredded.

NZ 280 444 A describes an imitation cheese product which contains natural cheese and an admixture of modified and unmodified, ungelatinized, low-amylose starch.

US 5 807 601 A describes an imitation cheese composition being made with less than 2% protein and/or less than 1% casein protein and which comprises 3% to 30% starch, 0% to 30% edible lipid material, 20% to 60% water, 0.5% to 25% non-starch carbohydrates, and 0.5% to 5% hydrocolloid stabilizers.

EP 2 030 507 A2 describes methods for producing process cheese products having both good melting properties and good shredding properties.

### [Prior Art Document]

### [Patent Document]

Japanese Patent Application Publication Sho 62-285755

Japanese Patent Application Publication Hei 2-92239

### [Disclosure]

### [Technical Problem]

It is an object of the present invention to provide a cheese-like food product which has mechanical processing adaptability such as shreddability and which can be easily melted by heat and retain a soft edible texture even after it is cooled.

### [Technical Solution]

Leading to the present invention, intensive and thorough research, conducted by the present inventors, resulted in the finding that a cheese-like food product having the features of claim 1 can resolve the problems encountered in the prior art.

More specifically, a cheese-like food product is provided which comprises an acid-treated starch in an amount of 8 - 15 wt%, a fat-and-oil in an amount of 20 - 40 wt%, wherein the fat-and oil has a solid fat content (SFC) of 55 wt% or higher at 10°C and 30 wt% or higher at 20°C and an open-tube melting point of 25 - 45°C, and a protein in an amount of 10 wt% or less, wherein the fat-and-oil contains P2O-type triglyceride in an amount of 8 % or higher, where P stands for palmitic acid and O stands for oleic acid.

The cheese-like food product may further comprise a thickener.

The cheese-like food product may have a hardness of 500g - 2000 g/19.6 mm2 at 5°C, as measured by a rheometer (a circular plunger with a diameter of 5 mm, and a table speed of 50 mm/min, Hudo Industries Ltd., JAPAN).

A molded cheese-like food product in a sliced, diced, rectangular block, or shredded phase, prepared by cutting the cheese-like food product described above is provided.

The molded cheese-like food product may exhibit heat meltability sufficient to turn into a paste phase upon heating at 200°C for 5 minutes.

A method for continuously producing the cheese-like food product described above is provided which comprises a heat treatment by means of a tube type heat exchanger or a direct steam blowing type sterilizer.

### [Advantageous Effect]

Provided is a cheese-like food product, which has mechanical processing adaptability such as shreddability and which can be easily melted by heat and retain a soft edible texture even after it is cooled.

### [Technical Solution]

Hereinafter, the present invention will be described in detail.

The cheese-like food product of the present invention is characterized in that it includes acid-treated starch. Acid-treated starch refers to a processed starch as a result of the treatment of untreated starch with an acid, such as hydrochloric acid or sulfuric acid. The starch to be used may include those derived from peas, potatoes, tapiocas, rice, waxy corn, corn, etc., and among them, as a raw material for a cheese-like food product in light of mechanical processing adaptability an acid-treated starch derived from peas and potatoes are preferable. In addition, in manufacturing the cheese-like food product, acid-treated starch derived from peas is most preferable in terms of mixed viscosity.

In the present invention, the acid-treated starch is added to the cheese-like food product in an amount of 8 - 15 wt%.

The cheese-like food product of the present invention is characterized in that it includes a fat-and-oil with a solid fat content (SFC) of 55 wt% or higher at 10°C, and an SFC of 30 wt% or higher at 20°C in light of mechanical processing adaptability. Among the fat-and-oils with an SFC of 55 wt% or higher at 10°C and 30 wt% or higher at 20°C are those containing P2O-type triglyceride in an amount of 8 % or higher and more preferably in an amount of 10 % or higher in light of mechanical processing adaptability of the cheese-like food product. The term P2O (P stands for palmitic acid and O stands for oleic acid)-type triglyceride is not given a limitation to a position isomer of a fatty acid within the triglyceride molecule, but is intended to encompass both 1,3-palmitoyl-2-oleyl glycerin and 1,2-palmitoyl-3-oleyl glycerin. A preferable P2O-type triglyceride may be a palm oil with an intermediate melting point, as obtained by further fractionation of palm olein oil which is obtained from palm oil by fractionation. In addition, the P2O-type triglyceride may be obtained by curing palm oil or by transesterification of a fat-and-oil containing oleic acid or palmitic acid.

For use in the cheese-like food product of the present invention, the fat-and-oil has an open-tube melting point of 25 - 45°C, and preferably 30 - 40°C in terms of flavor and melt-in-the-mouth texture.

Additionally, the cheese-like food product of the present invention comprises fat-and-oil in an amount of 20 - 40 wt%. Given the amount range, the fat-and-oil is speculated to form a better crystalline network and to help the aging of acid-treated starch, thereby conferring mechanical processing adaptability to the cheese-like food.

For the purpose of improving flavor, the cheese-like food product of the present invention may include a small amount of the fat-and-oil derived from butter, fresh cream, etc., in addition to a vegetable fat-and-oil. Also, the cheese-like food product may further include a natural cheese and/or a processed cheese. When used in the cheese-like food product, a small amount of a natural cheese and/or a processed cheese may bring about an improvement in flavor.

The protein contained in the cheese-like food product of the present invention may be a vegetable protein such as soybean protein, corn protein, wheat protein, pea protein, etc., or an animal protein such as casein, ovoalbumin, whey protein, gelatin, actin, myosin, silk protein, etc., and also may be a polypeptide, a peptide, or an amino acid. In the cheese-like food product, the protein is present in an amount of 10 wt% or less, and more preferably in an amount of 8 wt% or less.

When the amount of the protein in the cheese-like food product exceeds 10 wt%, the mixed viscosity increases during the manufacture of the cheese-like food product, thus making it difficult to manufacture the cheese-like food product.

A thickener, if used, may render an improved tackiness to the cheese-like food product. In addition, a thickener can enhance the mechanical processing adaptability of the shredded cheese to which it is applied. As a thickener, processed starch (hydroxypropylated starch), locust bean gum and guar gum may be preferably used.

The cheese-like food product of the present invention may further include an emulsifier in an amount low enough so as to not affect the flavor thereof. No particular limitations may be imposed on the emulsifier. A typical emulsifier known in the art may be used. Examples of the emulsifier include: lecithin, sucrose fatty acid ester, propylene glycol fatty acid ester, sorbitan fatty acid ester, glycerin fatty acid ester, polyglycerin fatty acid ester, various organic acid monoglycerides such as acetic acid monoglyceride, tartaric acid monoglyceride, acetic acid-tartaric acid mixed monoglyceride, citric acid monoglyceride, diacetyl tartaric acid monoglyceride, lactic acid monoglyceride, etc., and polyoxyethylenesorbitan fatty acid ester.

In addition to the emulsifier, other known additives may be employed, including a pH adjuster such as a phosphate. Furthermore, the cheese-like food product of the present invention may further include a flavor, such as milk flavor, cheese flavor, various spices, fruits purees or jams for flavor enrichment; sweeteners such as sucralose, aspartame, stevia, etc. to provide sweetness; and a coloring agent such as β-carotene or paprika pigment, annatto pigment, etc., to render colors. Also, a preservative, such as glycine, sodium acetate, lysoteam, etc., may be used for long-term storage.

The cheese-like food product of the present invention comprises an acid-treated starch, in an amount of 8-15 wt% a fat-and-oil with an SFC of 55 wt% or higher at 10°C, and 30 wt% or higher at 20°C, and a protein in an amount of 10 wt% or less. With regard to physical properties, the cheese-like food product preferably has a hardness of 500 - 2000 g/19.6 mm² as measured at 5°C by a rheometer (a circular plunger with a diameter of 5 mm, and a table speed of 50 mm/min, Hudo Industries Ltd., JAPAN). Given a hardness of 700 - 1800 g/19.6 mm², the cheese-like food product may be more preferably suitable for a shredding process.

When provided with the above-illustrated properties, the cheese-like food product of the present invention may exhibit mechanical processing adaptability sufficient to provide a mechanically processed cheese-like food in a cut, sliced, diced, rectangular block, or shredded phase.

Additionally, the cheese-like food product of the present invention is characterized by heat meltability, so that it turns to a paste phase upon heating at 200°C for 5 minutes. That is, a cheese-like food product with good heat meltability can be provided in accordance with the present invention. The heat meltability may be evaluated by a method described herein below.

The cheese-like food product may be evaluated for its heat meltability by shredding a cheese-like food product into a mechanically processed cheese-like food product having a size of about 30×5×3 mm, placing a filter paper within a heat-resistant circular metal container having an internal diameter of 85 mm and a thickness of 30 mm, placing 10 g of the cheese-like food product on top of the filter paper, adding 1 g of water to the filter paper, and heating the resultant in an oven maintained at 200°C for 5 minutes.

The cheese-like food product of the present invention may be prepared by, for example, performing a preliminary emulsification, homogenization, sterilization, and cooling of an oil in water emulsion, which includes a fat-and-oil, a dairy material, acid-treated starch, table salt, a pH adjuster, a flavor, and a pigment mixed therein. During the preliminary emulsification, the pH of the oil in water emulsion may be adjusted to pH 3.5 - 5.7 using an organic acid or alkaline salt, but it may also be adjusted via lactic acid fermentation. Adjusting pH via lactic acid fermentation is performed at 15 - 45°C using a lactic acid starter until the pH reaches 3.5 - 5.7, and preferably pH 4 - 5.5. When the pH is higher than 5.5 it will lead to poor long term storage. In contrast, when the pH is below 4 it causes a strong sour taste and deteriorates the flavor balance of the food if used as a cheese-like food product. Therefore, it is preferable that the above pH range be maintained. Heat sterilization may be employed to gelatinize starch and be preferably performed at 70 - 95°C.

In the above manufacturing method, the cheese-like food product of the present invention is characterized in that it contains acid-treated starch. Accordingly, it differs from the conventional natural cheese or processed cheese containing a protein gel as a backbone. The heat treatment process is also characterized in that, instead of a batch production, it enables a continuous production via continuous heat treatment via a tube type heat exchanger or a direct steam blowing type sterilizer. Examples of the heat exchanger capable of continuous heat treatment may include scraped-surface heat exchangers, etc.

A better understanding of the present invention may be obtained through the following examples which are set forth to illustrate, but are not to be construed as limiting the scope of the present invention. Furthermore, the parts and % in the examples are all based on weight.

### Example 1

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a pea-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heating at 80 - 90°C, filled in, quickly frozen by a tunnel freezer, and aged in a refrigerator thereafter.

The thus obtained cheese-like food product contained 34 wt% of a fat-and-oil and 1.6 wt% of a protein, and had a pH of 5.4. Also, it was found to have a hardness of 1,000 g/19.6 mm² as measured at 5°C by a rheometer (a circular plunger with a diameter of 5 mm, and a table speed of 50 mm/min, Hudo Industries, JAPAN). In addition, the cheese-like food product exhibited an excellent mechanical processing adaptability to a shredding process, etc., and an excellent heat meltability when heated at 200°C for 5 minutes, and maintained a soft texture and a good cheese flavor even after it was cooled.

### Example 2

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a potato-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 800 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 3

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a tapioca-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 500 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 4

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a rice-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 700 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 5

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a waxy corn-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 700 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 6

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a corn-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 1,000 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 7

At 55°C, 32 weight parts of a palm oil fraction with an intermediate melting point (an SFC of 90 wt% at 10°C, and 80 wt% at 20°C; a P2O type triglyceride content of 65 wt%; and an open-tube melting point of 30°C), 9 weight parts of a pea-derived, acid-treated starch, 6 weight parts of a waxy corn-derived, hydroxypropylated starch, 2 weight parts of a total milk protein, 5 weight parts of a natural cheese, 0.8 weight part of a table salt, 45.2 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 33.5 wt% of a fat-and-oil, 3 wt% of a protein, and had a pH of 5.4. Also, it was found to have a hardness of 1,000 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 8

At 55°C, 25 weight parts of a palm oil fraction with an intermediate melting point (an SFC of 90 wt% at 10°C, and 80 wt% at 20°C; a P2O type triglyceride content of 65 wt%; and an open-tube melting point of 30°C), 15 weight parts of a pea-derived, acid-treated starch, 1 weight part of a total milk protein, 1 weight part of a table salt, 58 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 25 wt% of a fat-and-oil, 0.8 wt% of a protein, and had a pH of 5.4. Also, it was found to have a hardness of 800 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 9

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a pea-derived, acid-treated starch, 1 weight part of a table salt, 53 weight parts of water, 1.7 weight parts of a pH adjuster containing lactic acid, 0.1 weight part of a flavor, 1 weight part of an emulsifier, and 0.002 weight part of a pigment were mixed for 10 min, followed by homogenization under 100 kg/cm².

Upon completion of the homogenization, the resulting homogenate was passed through a scraping-type continuous- heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 0 wt% of a protein, and had a pH of 5.4. Also, it was found to have a hardness of 800 g/19.6 mm² as measured at 5°C by a rheometer (a circular plunger with a diameter of 5 mm, and a table speed of 50 mm/min, Hudo Industries Ltd., JAPAN), an excellent mechanical processing adaptability to a shredding process, etc., and an excellent heat meltability when heated at 200°C for 5 minutes, and also maintained a soft texture and a good cheese flavor even after it was cooled.

### Example 10

At 55°C, 34 weight parts of a refined palm oil (an SFC of 55 wt% at 10°C, and 27 wt% at 20°C; a P2O type triglyceride content of 30 wt%; and an open-tube melting point of 37°C), 12 weight parts of a pea-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 500 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Example 11

At 55°C, 34 weight parts of a transesterified fat-and-oil of palm oil and palm kernel oil (an SFC of 48 wt% at 10°C, and 22 wt% at 20°C; and a P2O type triglyceride content of 8 wt%; and an open-tube melting point of 32°C), 12 weight parts of a pea-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 500 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes, and also maintained a soft texture and a good cheese flavor even after it was cooled.

### Comparative Example 1

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a potato-derived, oxidized starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 400 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent heat meltability when heated at 200°C for 5 minutes, and also maintained a soft texture and a good cheese flavor even after it was cooled. However, it exhibited a bit poor mechanical processing adaptability to a shredding process, etc.

### Comparative Example 2

At 55°C, 34 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a rice-derived, hydroxypropylated phosphate crosslinked starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 100 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an extremely poor mechanical processing adaptability such as to a shredding process and an extremely poor heat meltability when heated at 200°C for 5 minutes.

### Comparative Example 3

At 55°C, 34 weight parts of a salad oil (an SFC of 0 wt% both at 10°C and 20°C), 12 weight parts of a pea-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 100 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent heat meltability when heated at 200°C for 5 minutes, and also maintained a soft texture and a good cheese flavor even after it was cooled. However, it exhibited an extremely poor mechanical processing adaptability to a shredding process, etc.

### Comparative Example 4

At 55°C, 34 weight parts of a fat-and-oil (an SFC of 47 wt% at 10°C, and 17 wt% at 20°C; a P2O type triglyceride content of 5 wt%; and an open-tube melting point of 31°C), 12 weight parts of a pea-derived, acid-treated starch, 2 weight parts of a total milk protein, 1 weight part of a table salt, 51 weight parts of water, 1.7 weight parts of a pH adjuster containing lactic acid, 0.1 weight part of a flavor, and 0.002 weight part of a pigment were mixed for 10 min, followed by homogenization under 100 kg/cm².

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 34 wt% of a fat-and-oil, 1.6 wt% of a protein, and had a pH of 5.4. Also, it was found to have a hardness of 400 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited excellent heat meltability when heated at 200°C for 5 minutes, and also maintained a soft texture and a good cheese flavor even after it was cooled. However, it exhibited a bit poor mechanical processing adaptability to a shredding process, etc.

### Comparative Example 5

At 55°C, 25 weight parts of a palm oil fraction with an intermediate melting point (an SFC of 90 wt% at 10°C, and 80 wt% at 20°C; a P2O type triglyceride content of 65 wt%; and an open-tube melting point of 30°C), 12 weight parts of a pea-derived, acid-treated starch, 15 weight parts of a total milk protein, 1 weight part of a table salt, 47 weight parts of water, 1.7 weight parts of a pH adjuster containing lactic acid, 0.1 weight part of a flavor, and 0.002 weight part of a pigment were mixed for 10 min, followed by homogenization under 100 kg/cm².

### (However, its manufacture was difficult because of the high viscosity of the mixture.)

Upon completion of the homogenization, the resulting homogenate was passed through a scraped-surface heat exchanger, sterilized by heat at 80 - 90°C, filled in, quickly frozen using a tunnel freezer, and aged in a refrigerator thereafter.

The thus obtained cheese-like food product contained 25.2 wt% of a fat-and-oil, 12.2 wt% of a protein, and had a pH of 5.4. Also, it was found to have a hardness of 1,800 g/19.6 mm² as measured at 5°C by a rheometer (a circular plunger with a diameter of 5 mm, and a table speed of 50 mm/min, Hudo Industries Ltd., JAPAN). In addition, the cheese-like food product exhibited an excellent mechanical processing adaptability to a shredding process, etc., and an excellent heat meltability when heated at 200°C for 5 minutes. However, it failed to exhibit good softness being turned into a hard wax phase after it was cooled.

## Claims

1. An imitation cheese comprising,
acid-treated starch in an amount of 8 - 15 wt%;
a fat-and-oil in an amount of 20 - 40 wt%, the fat-and-oil having a solid fat content (SFC) of 55 wt% or higher at 10°C, and an SFC of 30 wt% or higher at 20°C, and an open-tube melting point of 25 - 45°C; and
a protein in an amount of 10 wt% or less,
wherein the fat-and-oil contains P2O-type triglyceride in an amount of 8 % or higher, where P stands for palmitic acid and O stands for oleic acid.

2. The imitation cheese according to claim 1, wherein the acid-treated starch is a processed starch that is obtained by treating untreated starch with hydrochloric acid or sulfuric acid.

3. The imitation cheese according to any of claims 1 to 2, wherein the imitation cheese further comprises a thickener.

4. A molded imitation cheese in a sliced, diced, rectangular block or shredded phase formed by cutting the imitation cheese according to any one of claims 1 to 3.

5. The molded imitation cheese according to claim 4, wherein the imitation cheese provided with heat meltability turns into a paste phase by heating at 200°C for 5 minutes, wherein heat meltability is evaluated by shredding the imitation cheese into a mechanically processed imitation cheese having a size of about 30×5×3 mm, placing a filter paper within a heat-resistant circular metal container having an internal diameter of 85 mm and a thickness of 30 mm, placing 10 g of the imitation cheese on top of the filter paper, adding 1 g of water to the filter paper, and heating the resultant in an oven maintained at 200°C for 5 minutes.

6. A method of continuous production of an imitation cheese according to any one of claims 1 to 3, wherein heat treatment is performed by means of a tube type heat exchanger or a direct steam blowing type sterilizer.

## Patentansprüche

1. Käseimitat, welches aufweist:
säurebehandelte Stärke in einer Menge von 8 - 15 Gew.-%,
ein Fett-und-Öl in einer Menge von 20 - 40 Gew.-%, wobei das Fett-und-Öl einen festen Fettgehalt (SFC) von 55 Gew.-% oder höher bei 10°C und einen SFC von 30 Gew.-% oder höher bei 20°C aufweist und einen in einem unverschlossenen Rohr gemessenen Schmelzpunkt von 25 - 45°C aufweist, und
ein Protein in einer Menge von 10 Gew.-% oder weniger,
wobei das Fett-und-Öl P20-artige Triglyceride in einer Menge von 8% oder mehr enthält, wobei P für Palmitinsäure und O für Ölsäure steht.

2. Käseimitat gemäß Anspruch 1, wobei die säurebehandelte Stärke eine verarbeitete Stärke ist, welche durch Behandeln von unbehandelter Stärke mit Salzsäure oder Schwefelsäure erhalten wird.

3. Käseimitat gemäß einem der Ansprüche 1 bis 2, wobei das Käseimitat ferner ein Eindickungsmittel enthält.

4. Geformtes Käseimitat in einer geschnittenen, gewürfelten, rechteckigen Block oder geraspelten Phase, die durch Schneiden des Käseimitats gemäß einem der Ansprüche 1 bis 3 gebildet wird.

5. Geformtes Käseimitat gemäß Anspruch 4, wobei das Käseimitat, das mit einer Wärmeschmelzbarkeit versehen ist, durch Heizen bei 200°C für 5 Minuten in eine pastöse Phase übergeht, wobei die Wärmeschmelzbarkeit durch Raspeln des Käseimitats in ein mechanisch bearbeitetes Käseimitat, das eine Größe von ungefähr 30 x 5 x 3 mm hat, Platzieren eines Filterpapiers innerhalb eines wärmebeständigen kreisförmigen metallischen Behälters, der einen inneren Durchmesser von 85 mm und eine Dicke von 30 mm hat, Platzieren von 10 g des Käseimitats auf das Filterpapier, Zufügen von 1 g Wasser auf das Filterpapier und Erwärmen des Resultats in einem Ofen, der bei 200°C für 5 Minuten gehalten wird, ausgewertet wird.

6. Verfahren zum kontinuierlichen Herstellen eines Käseimitats gemäß einem der Ansprüche 1 bis 3, wobei eine Wärmebehandlung mit Hilfe eines röhrenartigen Wärmetauschers oder eines direkten Dampfsterilisators durchgeführt wird.

## Revendications

1. Fromage d'imitation comprenant,
de l'amidon traité à l'acide en une quantité de 8 à 15 % en poids ;
une graisse-et-huile en une quantité de 20 à 40 % en poids, la graisse-et-huile ayant une teneur en graisse solide (SFC) de 55 % en poids ou plus à 10 °C, et une SFC de 30 % en poids ou plus à 20 °C et un point de fusion en tube ouvert de 25 à 45 °C ; et
une protéine en une quantité de 10 % en poids ou moins,
dans lequel la graisse-et-huile contient un triglycéride de type P2O en une quantité de 8 % ou plus, où P correspond à l'acide palmitique et O correspond à l'acide oléique.

2. Fromage d'imitation selon la revendication 1, dans lequel l'amidon traité à l'acide est un amidon traité qui est obtenu par traitement de l'amidon non traité avec de l'acide chlorhydrique ou de l'acide sulfurique.

3. Fromage d'imitation selon l'une quelconque des revendications 1 à 2, dans lequel le fromage d'imitation comprend en outre un épaississant.

4. Fromage d'imitation moulé en un bloc rectangulaire tranché, haché ou une phase rappée formée par découpage du fromage d'imitation selon l'une quelconque des revendications 1 à 3.

5. Fromage d'imitation moulé selon la revendication 4, dans lequel le fromage d'imitation fourni avec une capacité de fusion à la chaleur tourne en une phase pâteuse par chauffage à 200 °C durant 5 minutes, où la capacité de fusion à la chaleur est évaluée en rappant le fromage d'imitation en un fromage d'imitation traité mécaniquement ayant une taille d'environ 30x5x3 mm, en plaçant un papier-filtre dans un récipient métallique circulaire résistant à la chaleur ayant un diamètre interne de 85 mm et une épaisseur de 30 mm, en plaçant 10 g du fromage d'imitation au sommet du papier-filtre, en ajoutant 1 g d'eau au papier-filtre et en chauffant le produit obtenu dans un four maintenu à 200 °C durant 5 minutes.

6. Procédé de production continue d'un fromage d'imitation selon l'une quelconque des revendications 1 à 3, dans lequel le traitement à la chaleur est réalisé au moyen d'un échangeur de chaleur de type tube ou d'un stérilisateur de type soufflage de vapeur direct.
